**Europäisches Patentamt**

**European Patent Office**

**Office européen des brevets**

(19)

(11) Veröffentlichungsnummer : **0 347 609 B1**

(12) # EUROPÄISCHE PATENTSCHRIFT

(45) Veröffentlichungstag der Patentschrift :
**18.03.92 Patentblatt 92/12**

(51) Int. Cl.$^5$ : **C22B 43/00, H01M 6/52**

(21) Anmeldenummer : **89109570.5**

(22) Anmeldetag : **26.05.89**

(54) **Verfahren zur Rückgewinnung von Quecksilber aus Feststoffen.**

(30) Priorität : **24.06.88 DE 3821294**

(43) Veröffentlichungstag der Anmeldung :
**27.12.89 Patentblatt 89/52**

(45) Bekanntmachung des Hinweises auf die
Patenterteilung :
**18.03.92 Patentblatt 92/12**

(84) Benannte Vertragsstaaten :
**AT BE CH FR LI NL SE**

(56) Entgegenhaltungen :
**DE-A- 3 243 813**
**GB-A- 505 097**
**US-A- 4 165 981**

(73) Patentinhaber :
**KERNFORSCHUNGSZENTRUM KARLSRUHE
GMBH
Weberstrasse 5 Postfach 3640
W-7500 Karlsruhe 1 (DE)**

(72) Erfinder : **Borgstedt, Ulrich Hans, Dr.
Albert-Schweitzer-Strasse 33
W-7500 Karlsruhe (DE)**
Erfinder : **Bhat, Narayana Padmanabha, Dr.
9, 3rd Street
Dae Township Kalpakkam Tamilanadu (IN)**
Erfinder : **Frees, Günter
Schubertstrasse 1
W-7513 Stutensee-4 (DE)**

EP 0 347 609 B1

Jouve, 18, rue Saint-Denis, 75001 PARIS

**Beschreibung**

Die Erfindung betrifft ein Verfahren zur Rückgewinnung von metallischem und/oder chemisch gebundenem Quecksilber aus quecksilberhaltigen Feststoffen, insbesondere festen Abfällen wie Batterien und dgl. unter Ausschluß von Sauerstoff.

Quecksilberhaltige feste Abfälle sollen aus Umweltschutzgründen nicht deponiert werden. Da das Quecksilber einen beträchtlichen Wert repräsentiert, ist eine Behandlung der quecksilberhaltigen Abfälle mit dem Ziel einer Quecksilberrückgewinnung auch aus diesem Grund angezeigt.

Wenn Quecksilber in festen Abfällen ausschließlich in metallischer Form vorliegt und wenn die übrigen Bestandteile ausreichend thermisch stabil sind, bietet sich zur Quecksilberrückgewinnung an, die Abfälle in einem Trägergasstrom zu erhitzen und den Quecksilberdampf aus dem Gasstrom auszukondensieren.

Dieses Verfahren stößt in der Praxis meist auf Schwierigkeiten.

Zum einen können auch nicht flüchtige Quecksilberverbindungen in den Abfällen vorliegen und zum andern können sich nicht wärmebeständige Abfallbestandteile wie z. B. Kunststoffe bei einer Wärmebehandlung zersetzen und das Verfahren stark beeinträchtigen.

Nach der DE-OS 32 43 813 läßt sich Quecksilber auch aus Abfallen, die Kunststoffe enthalten, zurückgewinnen.

Hierzu werden die Gase langsam unter Zusatz eines Inertgases bei Unterdruck erhitzt. Die Abgase werden durch eine Nachbrennkammer mit einem speziell geformten Brenner geleitet, wobei die Kunststoffdämpfe vollständig verbrannt werden. Aus der Nachbrennkammer werden die Abgase durch ein Kühlgefäß und dann durch eine Kältefalle geleitet. In diesen Gefäßen wird das Quecksilber verflüssigt, so daß es abgelassen werden kann. Während der letzten Phase des Verfahrens pulsiert der Unterdruck im Inertgas.

Die Offenlegungsschrift gibt keinen Hinweis auf die Anwendbarkeit des Verfahrens beinichtflüchtige Quecksilberverbindungen enthaltenden Abfällen.

Das Verfahren ist kompliziert und erfordert einen hohen Meß- und Regelaufwand.

Aufgabe der Erfindung ist, Quecksilber aus Feststoffen, insbesondere festen Abfällen wie Batterien und dgl. zu entfernen.

Es sollen Abfälle aufgearbeitet werden können, in denen Quecksilber sowohl als chemische Verbindung wie auch in metallischer Form vorliegt.

Die Aufgabe wird erfindungsgemäß dadurch gelost, daß die Feststoffe bei einer Temperatur zwischen etwa 100° C und 450° C mit flüssigem Natrium reduzierend extrahiert werden und das gelöste Quecksilber von Natrium getrennt wird.

Zur Aufbereitung des in Natrium gelösten Quecksilbers können Destillationsverfahren angewendet werden.

Es hat sich jedoch als einfacher erwiesen, das Amalgam durch Zugabe von Wasser zu Natronlauge und flüssigem, metallischem Quecksilber umzusetzen und das Quecksilber durch Phasentrennung zu isolieren.

Vor Anwendung der erfindungsgemäßen Verfahrens werden die Abfälle getrocknet.

In einer Natriumschmelze werden bei Temperaturen von 120° C bis 300° C Oxide und Salze des Quecksilbers reduziert. Das Quecksilber hat eine relativ gute Löslichkeit in Natrium; bei 150° C lösen sich bis zu 40 at-% Hg, bei 250° C über 50 at-%. Die durch die Reduktion der Quecksilberverbindungen entstehenden Natriumsalze sind ebenso wie das Oxid in Natrium fast unlöslich. Man kann also die Natrium-Quecksilber-Schmelze (Amalgam) über Stahlmaschenfilter leicht von den festen Stoffen und Reaktionsprodukten abtrennen. Wegen der Reaktivität des Natriums mit den Bestandteilen der Atmosphäre muß man die Lösung und Filtration unter Schutzgas, z. B. Stickstoff, durchführen.

Nach der Filtration liegt das Amalgam vor, aus dem Quecksilber wegen des hohen Dampfdrucks beider Komponenten und der Bildung intermetallischer Verbindungen nicht leicht isoliert werden kann. Am einfachsten erscheint die wäßrige Zersetzung des Amalgams; dabei muß intensiv gekühlt werden. Aus Sicherheitsgründen empfiehlt sich auch bei diesem Verfahrensschritt die Anwendung von Schutzgas (Stickstoff). Dabei geht das Natrium in das Produkt Natronlauge über, das von geringerem Wert ist. Wegen der Wertrelation von Quecksilber und Natrium (etwa 100:1) ist das Verfahren durch den Verbrauch an Natrium nicht zu aufwendig.

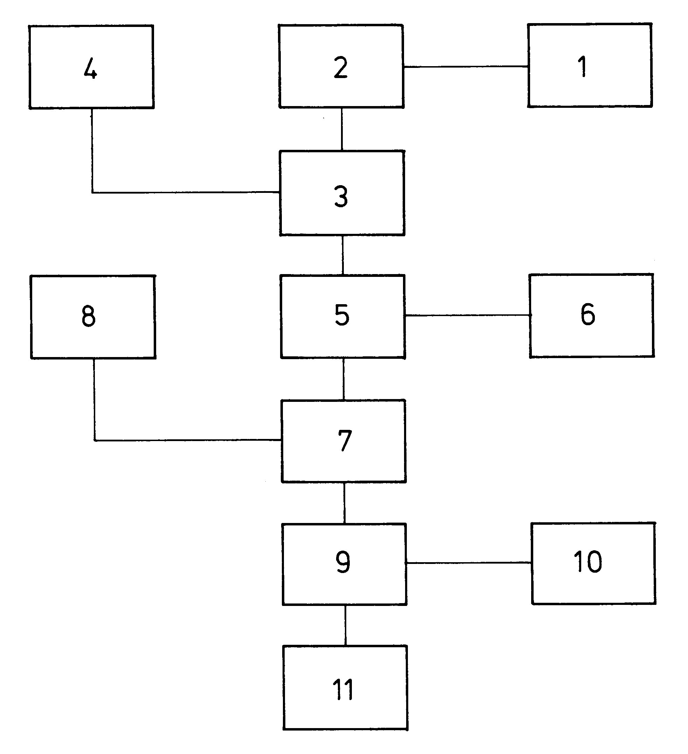

Ein Verfahrensschema ist in der Figur angegeben.

Das Verfahren wird in einer Handschuhbox durchgeführt, die mit Schleusen und einer Vorrichtung zum Spülen mit Inertgas ausgerüstet ist

Die Abfälle werden in Stahldrahtkörben 1 durch eine der Schleusen in die Handschuhbox eingebracht. In der Schleuse 2 können sie durch Evakuieren getrocknet werden.

Anschließend werden sie in die Extraktionsvorrichtung 3 eingebracht, die sich im Innern der Handschuhbox befindet. Aus einem Natriumschmelzer 4 wird frisch geschmolzenes Natrium auf den Abfall in der Extraktionsvorrichtung abgelassen, wobei der Stahldrahtkorb in die Extraktionsvorrichtung eintaucht.

Nach der Extraktion wird der Korb aus der Extraktionsvorrichtung 3 herausgehoben und die Natriumschmelze auf ein Filter 5 abgelassen. Die Filterrückstände 6 werden mit den Abfallresten im Korb vereinigt und gesondert weiterverarbeitet. Die gereinigte Natriumschmelze 7 wird außerhalb der Box mit Wasser 8 versetzt. Dabei bilden sich zwei Phasen aus Natronlauge 10 und flüssigem Quecksilber 11, die in einer Phasentrennvorrichtung 9 getrennt werden können.

Eine Variante bei höherer Temperatur benutzt die Destillationsextraktion. Bei einem Unterdruck von $10^{-4}$ bis $10^{-3}$ bar extrahiert man im Temperaturbereich 360°C bis 400° C praktisch im Bereich der vollständigen Mischbarkeit der beiden Metalle im flüssigen Zustand und hat eine besonders gute Wirksamkeit der Extraktion. Die festen Abfälle bleiben fast vollständig in den Stahldrahtkörben, so daß die Filterung im Filter 5 nur wenig Feststoffe abtrennen muß. Das Filtrat wird zur Trennung der beiden Metalle in die Verfahrensstufe wäßrige Aufarbeitung geleitet.

Die Erfindung wird im folgenden anhand von zwei Durchführungsbeispielen näher erläutert.

Beispiel 1:

Eine Mischung von 1 g Quecksilber mit je 0,5 g Quecksilberoxid und Quecksilberchlorid wurde mit rund 7 g Natrium von 150° C in inerter Gasatmosphäre zur Reaktion gebracht. Unter heftiger Umsetzung wurden die beiden Verbindungen reduziert und das gesamte Quecksilber im Natrium gelöst. Dabei schieden sich die Oxydationsprodukte des Natriums (Natriumoxid und Natriumchlorid) auf der Oberfläche ab. Diese Verunreinigungen wurden durch Filtration durch eine Glasfritte bei etwa 150° C abgetrennt. Die Lösung des Quecksilbers im Natrium wurde abgekühlt und unter Kühlung in inerter Gasatmosphäre mit Wasser zersetzt. Unter der verdünnten Natronlauge sammelten sich rund 1,8 g metallisches Quecksilber.

Beispiel 2:

Fünf gebrauchte Quecksilberknopfbatterien, die gemäß den Gleichungen
$$Zn + H_2O + HgO \rightarrow Zn(OH)_2 + Hg$$
$$Zn(OH)_2 \rightarrow ZnO + H_2O$$
Quecksilber bilden, wurden aufgebohrt und mit rund 5 g Natrium von 150° C umgesetzt. Dabei machte sich die Bildung des Amalgams durch eine deutliche Temperaturerhöhung bemerkbar. Die Lösung von Quecksilber im Natrium konnte in diesem Fall durch einfaches Dekantieren von den festen Rückständen, bestehend aus den Batteriegehäusen und eventuellen Reaktionsprodukten getrennt werden. Aus der Lösung wurde Quecksilber durch Zersetzung in gekühltem Wasser unter Schutzgas freigesetzt. Aus diesen Batterien wurden 2,9 g Quecksilber zurückgewonnen, bei der Lösung in Salpetersäure wurden in mehreren Fällen nur 1,3 bis 1,6 g Quecksilber erhalten, da ein Teil an den Gehäusen blieb.

**Patentansprüche**

1. Verfahren zur Rückgewinnung von metallischem und/oder chemisch gebundenem Quecksilber aus quecksilberhaltigen Feststoffen, insbesondere festen Abfällen wie Batterien und dgl. unter Ausschluß von Sauerstoff, dadurch gekennzeichnet, daß die Feststoffe bei einer Temperatur zwischen etwa 100° C und 450° C mit flüssigem Natrium reduzierend extrahiert werden und das gelöste Quecksilber von Natrium getrennt wird.

2. Verfahren nach Anspruch 1, dadurch gekennzeichnet, daß zur Abtrennung des Quecksilbers von Natrium das Amalgam mit Wasser versetzt und das metallische Quecksilber aus der gebildeten Natronlauge isoliert wird.

**Claims**

1. Method for the recovery of metallic and/or chemically bonded mercury from mercury-containing solids, in particular, solid wastes such as batteries etc. with the exclusion of oxygen. This method is characterized by a reducing extraction of the solids using liquid sodium at a temperature ranging from about 100 °C to 450 °C and the separation of the dissolved mercury from the sodium.

2. Method according to claim 1 and characterized by the addition of water to the amalgam for mercury separation from sodium and the isolation of the metallic mercury from the sodium hydroxide solution produced.

**Revendications**

1. Procédé pour récupérer du mercure métallique et/ou chimiquement lié à partir de matières solides en contenant, en particulier des rebuts solides comme des batteries et équivalents, à l'exclusion d'oxygène, caractérisé : -en ce que les matières solides sont extraites par action réductrice par du sodium liquide à une température comprise entre environ 100°C et 450°C et le mercure dissout est séparé du sodium.

2. Procédé selon la revendication 1, caractérisé en ce que pour séparer le mercure du sodium, l'amalgame est mélangé avec de l'eau et le mercure métallique est isolé de la lessive de soude formée.